(19) **Europäisches Patentamt European Patent Office Office européen des brevets**

(11) **EP 4 072 912 B1**

(12) **EUROPEAN PATENT SPECIFICATION**

(45) Date of publication and mention of the grant of the patent:
**27.03.2024 Bulletin 2024/13**

(21) Application number: **19828983.7**

(22) Date of filing: **10.12.2019**

(51) International Patent Classification (IPC):
**B60T 8/18** *(2006.01)*  **B60T 8/17** *(2006.01)*
**B60T 8/32** *(2006.01)*  **B60T 8/1755** *(2006.01)*
**B60T 8/1761** *(2006.01)*

(52) Cooperative Patent Classification (CPC):
**B60T 8/329; B60T 8/1708; B60T 8/17551; B60T 8/1881; B60T 8/323;** B60T 2201/16; B60T 2210/12

(86) International application number:
**PCT/EP2019/084369**

(87) International publication number:
**WO 2021/115565 (17.06.2021 Gazette 2021/24)**

(54) **CONTROL OF A REDUNDANT BRAKE DEVICE SYSTEM**

REDUNDANTE BREMSANLAGE

DISPOSITIF DE FREINAGE REDONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.10.2022 Bulletin 2022/42**

(73) Proprietor: **VOLVO TRUCK CORPORATION 405 08 Göteborg (SE)**

(72) Inventors:
• **LAINE, Leo 414 84 Göteborg (SE)**
• **HENDERSON, Leon 438 92 Härryda (SE)**
• **OSCARSSON, Christian 444 47 Stenungsund (SE)**

(74) Representative: **Ström & Gulliksson AB P.O. Box 4188 203 13 Malmö (SE)**

(56) References cited:
**WO-A1-2017/215751    US-A- 6 095 621 US-A1- 2017 210 361    US-B1- 6 317 675 US-B1- 6 345 225**

**Description**

TECHNICAL FIELD

The present invention relates to redundancy in braking systems for heavy duty vehicles.

The disclosure is particularly relevant to vehicles configured for autonomous drive. The invention can be applied in heavy-duty vehicles, such as trucks and construction equipment. Although the invention will be described mainly with respect to cargo transport vehicles such as semi-trailer vehicles and trucks, the invention is not restricted to this particular type of vehicle but may also be used in other types of vehicles such as cars.

BACKGROUND

The braking system of a heavy duty vehicle is key to safe vehicle operation. The braking system not only limits vehicle velocity when needed, but also plays an important role in maintaining vehicle stability. A heavy duty vehicle with a malfunctioning brake system therefore represents a significant risk. It is desired to minimize this risk.

To ensure that the vehicle does not lose braking capability, or becomes unstable due to a malfunctioning braking system, redundancy may be added to the braking system. Redundancy may be added both the control system as well as to the actuators, e.g., the disc or drum brakes.

In order to achieve redundancy in the vehicle braking system, a brake system layout that includes two or more independently controlled complete brake systems that are either arranged in parallel or in series is commonly used. Thus, if one system fails, a back-up system is available to assume control and operate the vehicle brakes. However, this type of redundancy drives overall vehicle cost and also complicates brake system servicing.

US 2017/0210361 A1 discloses a brake controller layout for a heavy-duty vehicle comprising redundancy.

US 6345225 discloses an electromechanical brake system.

US 6317675 discloses an electromechanical brake system comprising a pedal simulator. WO 2017/215751 discloses a wheel controller comprising a wheel slip calculation module. US 6095621 discloses a brake system.

It is important that vehicle stability and overall control is not negatively affected when switching to the redundant brake system.

SUMMARY

It is an object of the present invention to provide a redundant brake system which is robust in the sense that safe vehicle operation and controllability is maintained during and after a brake device failure and further a method for configuring said brake system, as defined in the respective independent device claim 1 and independent method claim 15.

This object is at least in part obtained by a braking system for a heavy duty vehicle. The braking system comprises a first brake controller arranged to control braking on a first wheel, and a second brake controller arranged to control braking on a second wheel, based on a respective wheel slip limit and on a respective brake torque request, wherein the first and the second brake controllers are interconnected via a back-up connection arranged to allow one of the first and the second brake controller to assume braking control of the wheel of the other of the first and the second brake controller in case of brake controller failure. The braking system also comprises a control unit arranged to, in response to brake controller failure, reduce the wheel slip limit associated with the failed brake controller to a reduced wheel slip limit.

By adding an extra safety margin to the set wheel slip limit, i.e., by configuring the reduced wheel slip limit, wheel slip becomes unlikely despite operating with a failed brake controller. This way it becomes easier to predict vehicle response to control inputs, which is an advantage.

According to aspects, the first brake controller is arranged to control braking on a front axle left wheel, and the second brake controller is arranged to control braking on a front axle right wheel, whereby the first and second brake controllers are arranged as fail-operational brake controllers. The herein disclosed techniques are particularly suitable for controlling slip limits imposed on front axle brake controllers, since they play an important role in vehicle control, especially during hard braking maneuvers. By the disclosed techniques, safe vehicle operation and ability to generate lateral tyre forces can be maintained despite brake controller failure on a front axle brake device.

According to aspects, the control unit is arranged to obtain data related to road friction from a functional brake controller, and to configure the wheel slip limit associated with the failed brake controller in dependence of the data related to road friction. This way the safety margin can be adjusted depending on driving scenario, which leads to increased overall control efficiency. In case road friction conditions are favorable, i.e., when road traction is good, a smaller safety margin may be added to the imposed wheel slip limit, while less favorable driving conditions may imply a larger safety margin added to the wheel slip limit imposed on the failed brake controller operating via the back-up connection.

According to aspects, the data related to road friction comprises a peak wheel slip value detected by the functional brake controller and/or road friction coefficient estimated by the functional brake controller. Knowing peak wheel slip value and/or estimated road friction allows for setting the wheel slip limit of the failed brake controller in a reliable and efficient manner.

According to aspects, the reduced wheel slip limit is determined based on a table of reduced slip limits, wherein the table of reduced slip limits is configured to be indexed by a wheel slip value determined for a wheel on the same side of the vehicle as the failed brake controller. Thus, from previous experimentation and/or analysis, a set of wheel slip limits for different driving conditions is stored in the table. A suitable wheel slip limit can then be selected based on the current driving scenario. For instance, suppose a front left brake controller fails, while favorable traction conditions are seen by the same side rear axle brake controllers, then a smaller reduction in posed wheel slip limit on the failed brake controller may be tabulated compared to the case when the same side rear axle brake controllers detect low friction conditions.

According to aspects, the reduced wheel slip limit is determined as the smallest peak wheel slip detected by a functional brake controller of a wheel on the same side of the vehicle as the failed brake controller, and reduced by a pre-determined safety factor.

This is a robust straight forward way to set the reduced wheel slip limit. The reduced wheel slip limit will vary depending on driving conditions in a local road area, while being robust due to the addition of the safety margin. The safety margin may, e.g., be on the order of 20% of the initially imposed wheel slip limit.

According to aspects, the control unit is arranged to increase brake torque and/or wheel slip limit on one or more trailer wheels in response to front axle brake controller failure. This effectively means that the trailer is used as anchor in order to slow down a vehicle combination suffering failure on a front axle brake controller. The tractor may, e.g., have entered some distance into a turn, where significant lateral forces are needed in order to successfully negotiate the turn, while the trailer is still not subject to large lateral forces since it has not entered as far into the turn. In case of wheel slip on the front axle wheels, the tractor may not be able to generate the required lateral forces. Slowing down the vehicle combination using the trailer may allow the tractor unit to regain road purchase and thus generate the required lateral forces.

According to aspects, the control unit is arranged to increase the configured wheel slip limit associated with the failed brake controller from the reduced wheel slip limit up to a back-up mode wheel slip limit. After the failure has taken place, and control algorithms and operations have stabilized, the slip situation can be evaluated. The effects of the brake controller failure on vehicle controllability can be reduced by increasing wheel slip level up towards the initially configured wheel slip limit that was in place prior to the brake controller failure, but only if driving conditions are such as to warrant an increase in imposed wheel slip limit of the failed brake controller.

According to aspects, a wheel speed sensor associated with a wheel on the front axle is arranged cross-wise connected to a brake controller associated with a wheel on the other side of the front axle. This cross-wise connection allows a WEM to monitor wheel speed on a wheel that it is controlled via the back-up connection. This increases the controllability and observability of the wheel associated with the failed brake controller, which is an advantage.

According to aspects, the vehicle comprises first and second rear wheel axles, wherein a wheel speed sensor associated with a wheel on the first rear axle is arranged connected to a brake controller associated with a wheel on the second rear wheel axle and on the same side as the wheel on the first rear axle. Thus way a brake controller on the rear axle is able to obtain wheel speed data from a wheel on the same side of the vehicle as its own wheel, which is an advantage. For instance, wheel lift-off may be detected by comparing the two or more different wheel speed measurements. Imposed wheel slip limit can be reduced in response to detecting wheel lift-off.

There is also disclosed herein systems, vehicles, methods, computer programs, computer readable media associated with the above discussed advantages.

BRIEF DESCRIPTION OF THE DRAWINGS

With reference to the appended drawings, below follows a more detailed description of embodiments of the invention cited as examples. In the drawings:

| | |
|---|---|
| Figures 1A-C | schematically illustrate example vehicles; |
| Figures 2A-B | show example interconnected brake controllers; |
| Figures 3A-B | show example driving scenarios; |
| Figure 4 | illustrates an example brake device layout; |
| Figure 5 | schematically illustrates a control unit and wheel end module assembly; |
| Figure 6 | is a graph showing relationships between tyre forces and wheel slip; |
| Figure 7 | is a graph showing an example of configured slip limits over time; |
| Figure 8 | is a flow chart illustrating methods; |
| Figure 9 | schematically illustrates a control unit; and |
| Figure 10 | shows an example computer program product. |

DETAILED DESCRIPTION OF EXAMPLE EMBODIMENTS OF THE INVENTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

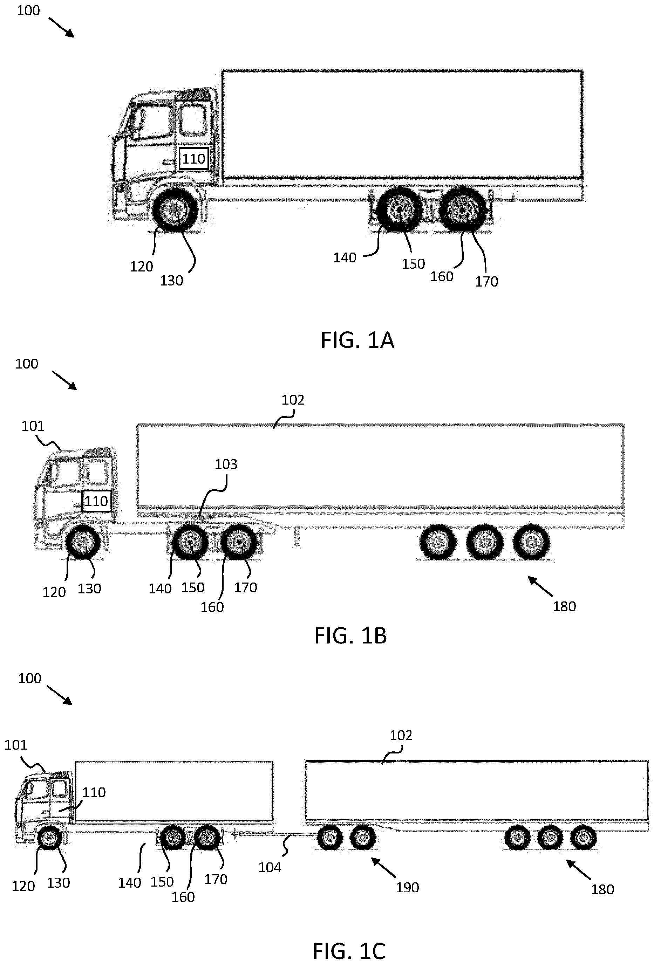

Figures 1A-C illustrate a number of example vehicles 100 for cargo transport. Figure 1A shows a truck supported on wheels 120, 140, and 160, some of which are driven wheels.

Figure 1B shows a semitrailer vehicle combination where a tractor unit 101 tows a trailer unit 102. The front part of the trailer unit 102 is supported by a fifth wheel connection 103, while the rear part of the trailer unit 102 is supported on a set of trailer wheels 180.

Figure 1C shows a truck with a dolly unit 104 arranged to tow a trailer unit 102. The front part of the trailer unit is then supported on a set of dolly wheels 190, while the rear part of the trailer is supported on a set of trailer wheels 180.

Each vehicle 100 comprises a control unit 110, such as a vehicle motion management (VMM) control module. This control unit may potentially comprise a number of sub-units distributed across the vehicle 100, or it can be a single physical unit. The control unit controls vehicle operation. The control unit 110 may, e.g. allocate brake force between wheels to maintain vehicle stability. Each of the wheel brake controllers is communicatively coupled to the control unit 110, allowing the control unit to communicate with the brake controllers, and thereby control vehicle braking.

Vehicle combinations such as those discussed above are known in general and will not be discussed in more detail herein. The techniques disclosed herein are applicable to a wide range of different vehicle combinations and vehicle types, not just to the combinations shown in Figures 1A-1C. It is furthermore appreciated that the techniques disclosed herein are also applicable to, e.g., an electrically powered vehicles or a hybrid electric vehicles.

Each wheel is associated with a wheel brake 130, 150, 160 (trailer unit wheel brakes are not indicated in Figures 1A-1C). This wheel brake may, e.g., be a pneumatically actuated disc brake or drum brake, but some aspects of the disclosure are also applicable for regenerative brakes which produce electrical power during vehicle retardation.

The wheel brakes are controlled by brake controllers. Herein, the terms brake controller, brake modulator, and wheel end module will be used interchangeably. They are all to be interpreted as a device which controls applied braking force on at least one wheel of a vehicle, such as the vehicle 100. A service brake system is a system which brakes the vehicle during drive operation, as opposed to a parking brake system which is configured to keep the vehicle in a fixed position when parked.

Brake force will herein be quantified as brake torque. It is straightforward to translate between brake torque and brake force.

For the brake system it is desirable that, in the event of a single electrical failure, no or limited loss of braking performance (maximum deceleration capability) and no or limited loss of vehicle stability occurs. Most known service brake systems can only fulfil this requirement if two service brake systems are installed in parallel, resulting in a doubling of parts, piping and air fittings.

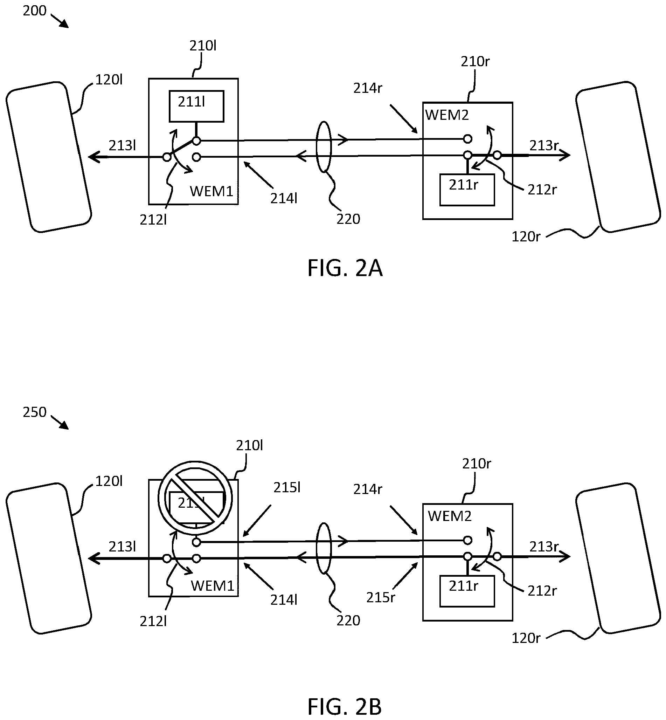

Recent development in service brake systems, however, comprises an arrangement that instead includes individual brake controllers at each wheel of the vehicle. In normal operation each brake controller is responsible for controlling the brake force, preventing wheel locking and carrying out diagnostics on a respective wheel of the controller. However, in addition to this, a control output of each controller can also be connected to a 'back-up' port on one of the other brake controllers. This way a controller can assume the function of a faulty controller by operating its connection to the back-up port of the faulty controller. The connection to the back-up port may be a pneumatic connection. The faulty controller then only needs to open up access between the back-up port and the brake actuator in order to allow an external controller to control wheel braking by the actuator of the failed controller. Figures 2A-B schematically illustrate a set-up 200, 250 like this; a left wheel end module (WEM) 210l is arranged to control braking of a left front axle wheel 120l via a control connection 213l. The control connection may, e.g., be a pneumatic connection for actuating a disc brake or the like. A right WEM 210r is arranged to control braking of a right front axle wheel 120r via a similar control connection 213r.

The two WEMs are linked by a back-up connection 220, allowing each WEM to assume control of the braking of the other wheel. Thus, if one of the WEMs fail the other can take over in order to maintain vehicle braking capacity, effectively providing brake control redundancy.

Each WEM 210l, 210r comprises means 211l, 211r for generating braking force on its respective wheel. In a default mode (shown in Figure 2A), where both WEMs 210l, 210r are fully functional and operation as intended, the back-up ports 214l, 214r are disconnected from the respective wheel brake by switches 212l, 212r. These 'switches' may, e.g., be pneumatic valves in case the back-up connection 220 is a pneumatic connection. If a WEM 210l, 210r fails, it flips its respective switch 212l, 212r such that the other WEM can assume control via the control connection 220. The change in mode from an active mode where the controller is in control of the brake to a slave mode where the controller passes control to the other controller may be automatically triggered by, e.g., loss of electrical power or the like.

When one front axle WMM 210l, 210r fails, it may therefore use the other (still functional) WEM for brake control. The switch 212l, 212r may be operated automatically upon WEM failure, or it may be operated remotely from the control unit 110. In case the switch is a pneumatic valve, the valve may, e.g., be default open and/or remotely controllable from the control unit 110, i.e., if the brake controller dies, the valve automatically opens (either on its own or by external control signal) to allow control by the other brake controller.

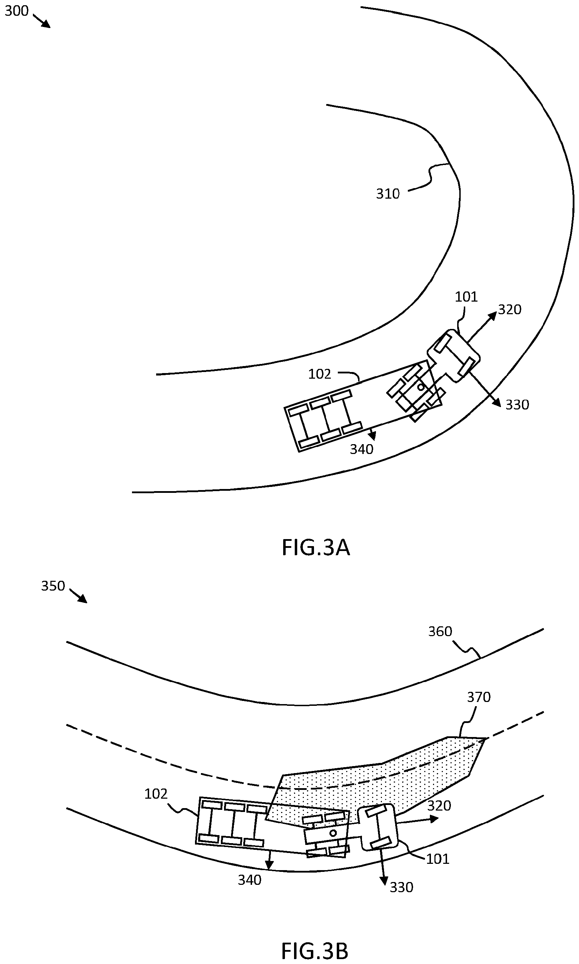

Figure 2B schematically illustrates a scenario 250 where the left front axle controller 210l has failed. If, for instance, the left wheel 120l brake controller 210l suffers an electrical fault it will automatically fail to a state that passes the pneumatic pressure applied to its back-up port 214l, such that the back-up connection 220 becomes connected to the control connection 213l. Both wheels 120l, 120r will therefore now be controlled by the right hand brake controller 210r as shown in Figure 3, with the failed controller 210l acting as a slave, making the overall system 200 fail-operational.

However, a vehicle operating according to the scenario 250, where a brake controller has failed and a functional controller controls both its own brake and that of the failed controller, may face challenges when negotiating difficult driving scenarios. This is at least in part because of the longer control connection between controller and actuator via the back-up connection, which may limit control loop bandwidth.

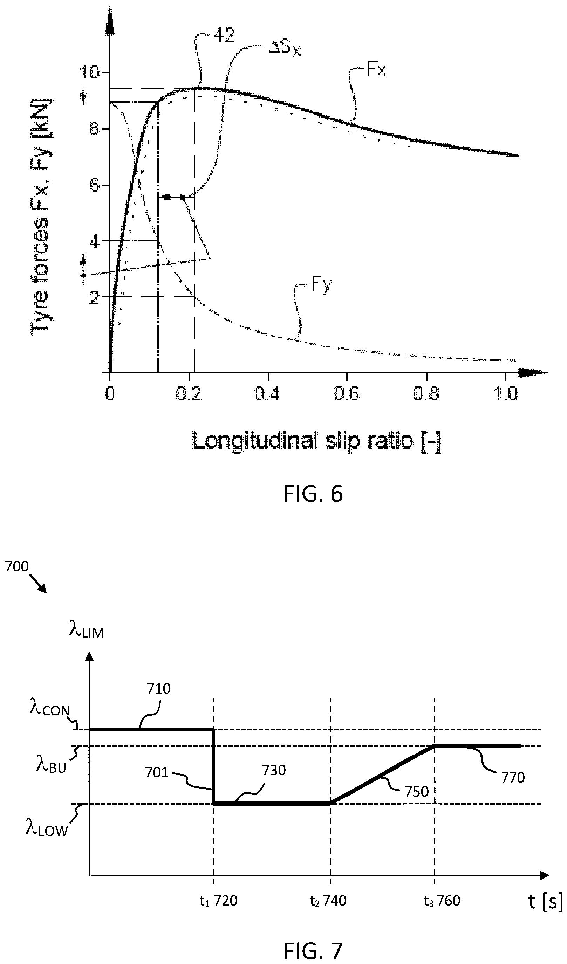

Figure 3A shows a scenario 300 where the tractor unit 101 enters a road stretch 310 with a closing curve characteristic. To negotiate the curve, the vehicle combination 101, 102 needs to be able to generate significant lateral forces 330, 340 in addition to the longitudinal force 320. This is only possible if wheel slip is kept below a limit, as shown in Figure 6, where $F_x$ is tyre (or wheel) longitudinal force, $F_y$ is tyre (or wheel) lateral force. It is seen in Figure 6 that, as longitudinal wheel slip increases, the ability to generate lateral forces $F_y$ decrease significantly. Wheel slip control ability may be limited when operation is based on the back-up connection 220, since control loop time constants and the like may be prolonged compared to normal operation. It is important that the vehicle combination is able to maintain operation where wheel slip is controlled, even when confronted with WEM failure.

Figure 3B shows another scenario 350 where the vehicle combination 101, 102 enters a road stretch 360 with a patch 370 having low friction, such as a locally icy area. This low friction area 370 may cause significant wheel slip on one side of the vehicle combination 101, 102, which in turn will limit the ability of the vehicle to generate sufficient lateral forces to negotiate the curve. Again, it is important that the vehicle combination is able to maintain operation where wheel slip is controlled, even when confronted with WEM failure.

Some of the techniques disclosed herein takes advantage of the interface used between a VMM and the brakes. As described in PCT/EP2016/063782 the VMM domain may send wheel torque request and wheel slip limit to each local brake controller. This limit is usually selected to give maximum braking performance. However, when one wheel unit has failed, this slip limit is herein manipulated to a lower value than normal. This value can correspond to a value that is still within the linear region of the tyres force vs slip curve for all foreseeable road conditions (see Figure 6). This will prevent wheel lock on both wheel, therefore preventing undesired loss of lateral tyre force.

Note that, in both scenarios 300, 350, the VMM or vehicle control unit 110 may use the trailer 102 as an 'anchor' in order to slow down the vehicle and avoid significant wheel slip. In other words, according to aspects, the vehicle control unit 110 is arranged to increase brake torque and/or wheel slip limit on one or more trailer wheels in response to front axle brake controller failure. This effectively means that the trailer is used as anchor in order to slow down a vehicle combination suffering failure on a front axle brake controller. The tractor may, e.g., have entered some distance into a turn, where significant lateral forces are needed in order to successfully negotiate the turn, while the trailer is still not subject to large lateral forces since it has not entered as far into the turn. In case of wheel slip on the front axle wheels, the tractor may not be able to generate the required lateral forces. Slowing down the vehicle combination using the trailer may allow the tractor unit to regain road purchase and thus generate the required lateral forces.

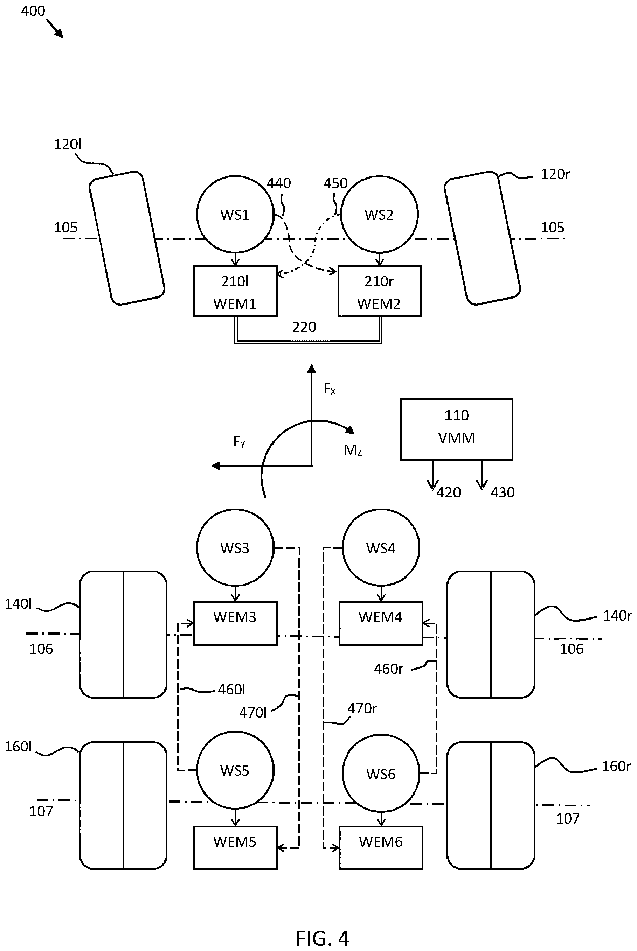

Figure 4 shows an example brake device system 400 layout according to the present teaching. There are two front axle wheels 120l, 120r, and four rear axle wheels 140l, 160l, 140r, 160r. Each wheel has a corresponding WEM, numbered from 1 to 6 in Figure 4. Each wheel also has at least one associated wheel speed sensor (WS), numbered from 1 to 6 in Figure 4. Wheel speed sensors and their use for vehicle control is known and will not be discussed in more detail herein.

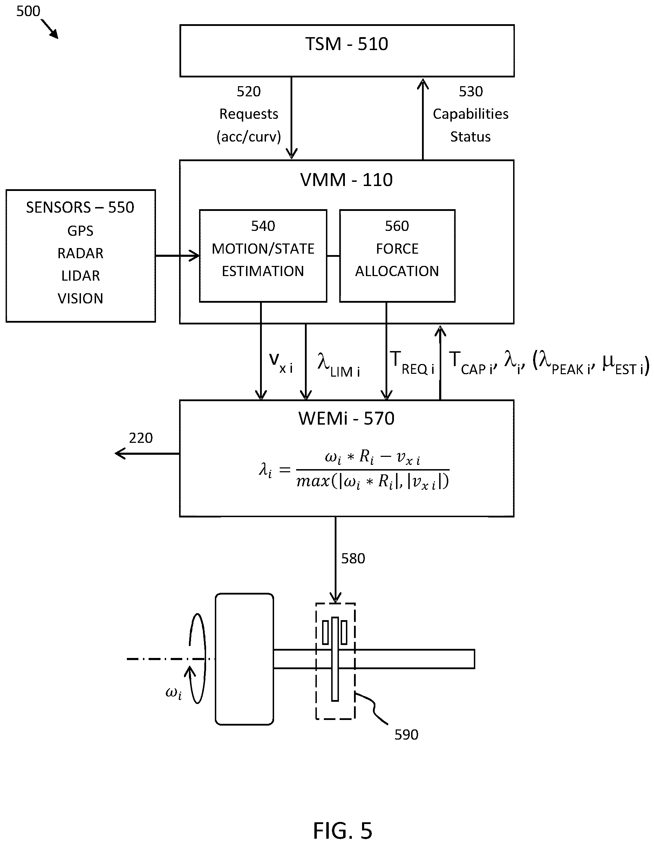

A vehicle motion management module (VMM) is a control unit 110 arranged to control at least part of the vehicle braking functionality. This unit will be discussed in more detail below in connection to Figure 5. As noted above, the VMM may not only use the braking system for deceleration of the vehicle 100, but also for controlling vehicle stability as it maneuvers, e.g., using the trailer 102 as an anchor as discussed above in connection to Figures 3A and 3B.

Front axle WEMs 210l, 210r are arranged to be fail operational. Herein, 'fail operational' means that one controller may fail without the vehicle loosing significant braking capability, since the other controller will take over via the back-up connection 220. Also, vehicle stability will likely not be critically affected since braking capability on the front axle wheels is substantially maintained. A failed WEM on the front axle will set the switch 212l, 212r (not shown in Figure 4) to open stage and the still functioning WEM on the front axle takes control of the other wheel also.

Each wheel 120l, 120r on the front axle 105 has an associated wheel speed sensor WS1, WS2. The data from the wheel speed sensor may be used to control braking in a known manner. Cross-connections 440, 450 between one or more wheel speed sensors on one side of the vehicle may be connected to the brake controller on the other side of the vehicle. Rear axle WEMs, i.e., WEM 3, WEM 4, WEM 5, WEM 6 in Figure 4, are, according to some aspects, arranged to be fail silent. Herein, 'fail silent' means that one controller may fail without any back-up controller stepping in to maintain braking capability on the corresponding wheel. The wheel of the failed controller then effectively becomes an unbraked free-running wheel. For the rear axles, the WEMs on one side share the wheel speeds sensors for redundancy, as shown in Figure 4 by connections 460l, 460r, 470l, 470r. This way at least hard braking can be made even with a failed wheel speed sensor on a rear axle wheel.

It is appreciated that first rear axle 106 brake controllers WEM3, WEM4 may, according to some aspects, be arranged in fail-operational mode as shown in Figure 2A and 2B instead of in fail-silent mode as shown in Figure 4.

It is furthermore appreciated that second rear axle 107 brake controllers WEM5, WEM6 may, according to some aspects, be arranged in fail-operational mode as shown in Figure 2A and 2B instead of in fail-silent mode as shown in Figure 4.

An advantage with connecting wheel speed sensors on different rear axles to a brake controller is that the brake controller can compare the different wheel speeds and thereby detect, e.g., wheel lift-off conditions and the like. This detection may be communicated to the control unit 110.

Figure 5 schematically shows a system for vehicle control. A traffic situation management (TSM) module 510 plans a vehicle trajectory and, based on the planned trajectory, requests acceleration and curvature profiles 520 from the VMM 110. The VMM 110 responds back with current vehicle capabilities and status 530, whereby the TSM module can update and maintain the planned trajectory to, e.g., ensure vehicle safety while optimizing vehicle operation.

The VMM module 110 has access to various forms of sensor data 550 from which a vehicle state can be inferred. The sensor data may, e.g., comprise external data from any combination of: one or more global positioning system (GPS) receivers, one or more radio detection and ranging (radar) transceivers, one or more light detection and ranging (lidar) transceivers, and one or more vision based sensors, such as cameras and the like. Sensor data may also comprise internal sensor data from, e.g., wheel speed sensors, steering angle sensors, brake and drive torque estimators, inertial measurement unit (IMU) sensors, and the like.

The external and the internal sensor data is input to a motion and state estimation module 540 which filters the data and estimates vehicle state. Such motion and state estimation modules are known and will not be discussed in more detail herein. The vehicle state may comprise variables related to, e.g., position of the chassis in a global reference system, roll, pitch and yaw in the global reference system, as well as longitudinal velocities $v_{x\,i}$ for each wheel in a local wheel reference frame. Knowing as longitudinal velocities $v_{x\,i}$ for each wheel, in the coordinate system of the wheel, is important, as it allows the system to accurately determine wheel slip $\lambda$.

The VMM or control unit 110 determines a force allocation 560 to meet the requests from the TSM module 510. This force allocation may comprise setting torque requests $T_{REQ\,i}$ on specific wheel brakes as well as controlling propulsion sources and steering angles.

The VMM module also specifies a wheel slip limit for each WEM, $\lambda_{LIM\,i}$, to be adhered to by the given WEM. Thus, with reference to Figure 5, a WEM, say the i-th WEM 570, receives wheel speed $v_{x\,i}$, wheel slip limit $\lambda_{LIM\,i}$, and torque request $T_{REQ\,i}$. Based on the received parameters, the WEM controls 580 its respective brake device 590 and potentially also a failed WEM via the back-up connection 220.

The WEM may determine (and report back) a current wheel slip

$$\lambda_i = \frac{\omega_i * R_i - v_{x\,i}}{max(|\omega_i * R_i|, |v_{x\,i}|)}$$

where $\omega_i$ is wheel rotational velocity and $R_i$ is wheel radius. According to this definition, slip is positive for propulsion slip and negative for braking slip. However, in the following, when limits on wheel slip are discussed, the limit refers to the absolute value of wheel slip. Thus, an increased wheel slip limit refers to either a larger allowed positive wheel slip limit or a smaller allowed negative wheel slip limit according to the definition above.

The largest wheel slip $\lambda_{PEAK\,i}$ detected over a time window may be reported back to the VMM, and also an estimated road friction coefficient $\mu_{EST\,i}$. The estimated road friction coefficient may correspond to a value $\mu$ such that achievable lateral tyre force $F_y$ is limited by

$$F_y \leq \mu F_z$$

where $F_z$ is the normal force acting on a tyre. The WEM may also determine and report back a current torque capability $T_{CAP\,i}$.

If a WEM fails and enters slave mode, where the back-up connection 220 is used to control wheel braking on the wheel associated with the failed controller, the wheel slip limit $\lambda_{LIM\,i}$ is adjusted as discussed above. An example wheel slip limit for a failing WEM is shown vs time in Figure 7. The slip limit $\lambda_{LIM}$ shown in figure 7 is the slip limit effectively applied to both wheels on the axle where one brake controller configured in fail-operational mode has failed.

The WEM is initially configured with some wheel slip limit $\lambda_{CON}$ 710. The WEM then, at time $t_1$ 720, fails for some reasons, and enters slave mode where wheel brake control is via the back-up connection 220. When this happens, the wheel slip limit is automatically reduced 601 down to a reduced wheel slip limit $\lambda_{LOW}$ 730. This reduced wheel slip limit implies that the vehicle control is executed with larger safety margins where wheel slip is unlikely. The reduced wheel slip limit may, e.g., correspond to a region of linear obtainable tyre lateral force.

The reduced wheel slip limit $\lambda_{LOW}$ 730 is then maintained for a period of time up to time $t_2$. At time $t_2$ is has been determined that vehicle control safety margins can be reduced, e.g., due to other WEMs reporting low peak wheel slip values $\lambda_{PEAK}$ and/or high estimated road friction conditions $\mu_{EST}$.

The wheel slip limit associated with the failed WEM is then, at time $t_2$ 740, gradually increased 750 up to a back-up wheel slip limit value $\lambda_{BU}$ 770 which is reached at time $t_3$ 760. This back-up wheel slip limit value $\lambda_{BU}$ 770 may equal the originally configured wheel slip limit $\lambda_{CON}$ 710, or it can be some other value. The back-up wheel slip limit value is, however, often below the wheel slip limit value used when the brake controller is fully functional.

It is appreciated that there may be some difference in desired control strategy if the system includes the cross connections 440, 450 of wheel speed sensors or not. For the case where no cross connection of wheel speed sensors exit the functioning WEM will control the applied brake pressure (sent to both wheels) according to the wheel speed measured on just one wheel. It is in that case important to select a slip limit with sufficient safety margin so that it is unlikely that wheel lock will occur on the wheel with a faulty controller where no feedback exists. For the case where cross connections 440, 450 of wheel speed sensor output exists, the functioning brake controller can follow the slip limit with a 'select low' approach - i.e. the brake pressure will be controlled at a level such that neither wheel is allowed to exceed the configured slip limit. To summarize, Figure 7 shows an example of operations in a braking system for a heavy duty vehicle 100. The braking system comprises a first brake controller WEMi, 570, arranged to control braking on a first wheel 120, 150, 170, and a second brake controller WEMi, 570, arranged to control braking on a second wheel 120, 150, 170, based on a respective wheel slip limit $\lambda_{LIM\,i}$, and on a respective brake torque request $T_{REQ\,i}$. The first and the second brake controllers are interconnected via a back-up connection 220 arranged to allow one of the first and the second brake controller to assume braking control of the wheel of the other of the first and the second brake controller in case of brake controller failure. The braking system comprises a control unit 110 arranged to, in response to brake controller failure, reduce 701 the configured wheel slip limit $\lambda_{CON}$, 710, associated with the failed brake controller to a reduced wheel slip limit $\lambda_{LOW}$, 730.

This means that vehicle control margins are increased in response to brake controller failure. The increased margins may, e.g., be warranted since there will be some additional delay in the braking system due to the added length of control connections between the master brake controller operating the back-up connection 220 and the failed brake controller operating in slave mode.

Normally, although not necessarily, the first brake controller 570, WEM1, is arranged to control braking on a front axle 101 left wheel 120l, and the second brake controller 570, WEM2 is arranged to control braking on a front axle 101 right wheel 120r, whereby the first and second brake controllers are arranged as fail-operational brake controllers. This set-up was exemplified and discussed above in connection to Figures 2A and 2B.

According to some aspects, the control unit 110 is arranged to obtained data related to road friction from a functional brake controller, and to configure the wheel slip limit $\lambda_{LIM\,i}$ associated with the failed brake controller in dependence of the data related to road friction. Thus, in case road friction conditions are favorable, the wheel slip limit $\lambda_{LIM\,i}$ associated with the failed brake controller may be increased by an amount, since no significant safety margins may be needed. On the other hand, if road friction conditions reported by functional brake controllers are not favorable, e.g., due to wet or icy road conditions, the safety margin may even need to be increased beyond that originally configured.

According to some such aspects, the data related to road friction comprises a peak wheel slip value $\lambda_{PEAK}$ detected by the functional brake controller. The peak wheel slip value is an indication of the road friction conditions. For instance, in case some controller has detected high wheel slip values, then a significant safety margin may be warranted, and vice versa. The functional brake controller used to determine road friction conditions is preferably a brake controller associated with a wheel on the same side of the vehicle 100 as the failed brake controller. This is because the road friction conditions detected by a brake controller associated with a wheel on the same side of the vehicle 100 as the failed brake controller is likely to exhibit a larger degree of correlation with the failed brake controller compared to a brake controller on the other side of the vehicle 100.

According to some aspects, the reduced wheel slip limit 730 is determined based on a table of reduced slip limits. This table of reduced slip limits may be configured to be indexed by a wheel slip value determined for a wheel on the same side of the vehicle as the failed brake controller. The table may be pre-determined and stored in the control unit 110.

According to some other aspects, the reduced wheel slip limit is determined as the smallest peak wheel slip detected by a functional brake controller of a wheel on the same side of the vehicle as the failed brake controller, and reduced by a pre-determined safety factor.

With reference to Figure 7, the control unit 110 may also be arranged to increase the configured wheel slip limit $\lambda_{LIM\,i}$ associated with the failed brake controller from the reduced wheel slip limit $\lambda_{LOW\,i}$, 730 up to a back-up mode wheel slip limit $\lambda_{BU}$, 770. This can, for instance, be done if overall road conditions are found to be favorable. For instance, the road surface may be dry and even with no ice formation, therefore providing favorable braking conditions. The increase is preferably gradual and smooth. For instance, the increase from the reduced wheel slip limit $\lambda_{LOW\,i}$, 730 up to the back-up mode wheel slip limit $\lambda_{BU}$, 770 may be a linear function 750 or at least a pricewise linear function such as an increase over a series of consecutive smaller steps. The difference between the back-up mode wheel slip limit $\lambda_{BU}$, 770 and the initially configured wheel slip limit may be set according to driving scenario, however, the back-up mode wheel slip limit 770 is preferably below the initially configured wheel slip limit 710.

The control unit 110 shown in Figures 4 and 5 may furthermore be arranged to control the braking system 400 via at least a first data bus 420 and a second data bus 430 separate from the first data bus. The first data bus 420 is then arranged to control at least the first brake controller WEM1 and a fourth brake controller WEM4, and the second data bus 430 is arranged to control at least the second brake controller WEM2 and a third brake controller WEM3. This way one of the data busses may fail without the vehicle suffering total loss of braking capability.

Figure 4 also shows a number of wheel speed sensors arranged in connection to respective wheels. The wheel speed sensors may be cross-wise connected, i.e., optionally, a wheel speed sensor WS1, WS2 associated with a wheel 120l, 120r on the front axle 101 is arranged connected to 440, 450 a brake controller WEM1, WEM2 associated with a wheel 120l, 120r on the other side of the front axle.

According to some aspects, the rear axle WEMs on one side share wheel speeds sensors for redundancy, as shown in Figure 4 by connections 460l, 460r, 470l, 470r. This way at least hard braking can be made even with a failed wheel speed sensor on a rear axle wheel. Thus, optionally, the vehicle comprises first 106 and second 107 rear wheel axles, wherein a wheel speed sensor WS3, WS4 associated with a wheel 140l, 140r on the first rear axle 102 is arranged connected to 460l, 470r, 460l, 470r a brake controller WEM5, WEM6 associated with a wheel 160l, 160r on the second rear wheel axle 107 and on the same side as the wheel on the first rear axle 102.

An advantage with connecting wheel speed sensors on different rear axles to a brake controller is that the brake controller can compare the different wheel speeds and thereby detect, e.g., wheel lift-off conditions and the like. This detection may be communicated to the control unit 110. When this happens, the control unit 110 may reduce the configured wheel slip limit $\lambda_{LIM\,i}$ associated with the brake controller that detects wheel lift-off.

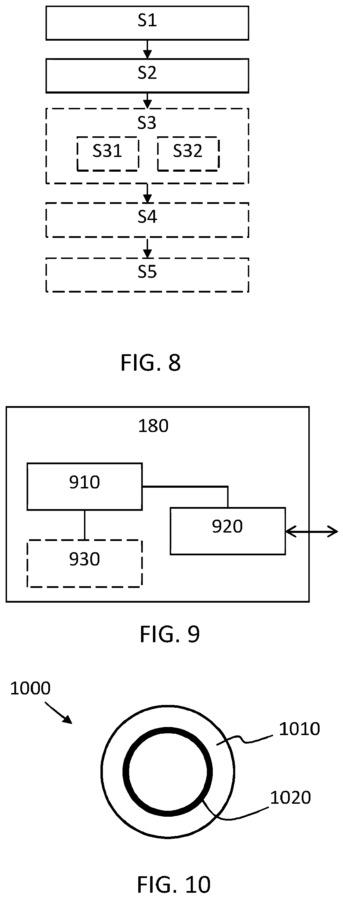

Figure 8 is a flow chart illustrating a method for braking a heavy duty vehicle 100. Aspects of the method were discussed above in connection to Figure 6. The method comprises;

configuring S1 a braking system comprising a first brake controller 570, WEMi, arranged to control braking on a first wheel 120, 150, 170, and a second brake controller 570, WEMi, arranged to control braking on a second wheel 120, 150, 170, based on a respective configured wheel slip limit $\lambda_{LIM\,i}$, 570, 600, and on a respective brake torque request $T_{REQ\,i}$, 570. The first and the second brake controllers are interconnected via a back-up connection 220 arranged to allow one of the first and the second brake controller to assume braking control of the wheel of the other of the first and the second brake controller in case of brake controller failure, and

in response to brake controller failure, reducing S2, 601 the configured wheel slip limit $\lambda_{CON}$, 710 associated with the failed brake controller to a reduced wheel slip limit $\lambda_{LOW}$, 730. Thus, the method summarizes some key aspects of the brake system operations discussed above.

According to some aspects, the method comprises obtaining S3 data related to road friction from a functional brake controller, and configuring S4 the wheel slip limit $\lambda_{LIM\,i}$ associated with the failed brake controller in dependence of the data related to road friction. According to some such aspects, the data related to road friction comprises a peak wheel slip value $\lambda_{PEAK}$ detected by the functional brake controller S31.

According to other such aspects, the functional brake controller is a brake controller associated with a wheel on the same side of the vehicle 100 as the failed brake controller S32.

The method optionally also comprises increasing S5 the configured wheel slip limit $\lambda_{LIM\,i}$ associated with the failed brake controller from the reduced wheel slip limit $\lambda_{LOW}$, 730 up to a back-up mode wheel slip limit $\lambda_{BU}$, 770.

Figure 9 schematically illustrates, in terms of a number of functional units, the components of a control unit 110 according to embodiments of the discussions herein. This control unit 110 may be comprised in the vehicle 100. Processing circuitry 910 is provided using any combination of one or more of a suitable central processing unit CPU, multiprocessor, microcontroller, digital signal processor DSP, etc., capable of executing software instructions stored in a computer program product, e.g. in the form of a storage medium 930. The processing circuitry 910 may further be provided as at least one application specific integrated circuit ASIC, or field programmable gate array FPGA.

Particularly, the processing circuitry 910 is configured to cause the control unit 110 to perform a set of operations, or steps, such as the methods discussed in connection to Figure 8. For example, the storage medium 930 may store the set of operations, and the processing circuitry 910 may be configured to retrieve the set of operations from the storage medium 930 to cause the control unit 110 to perform the set of operations. The set of operations may be provided as a set of executable instructions. Thus, the processing circuitry 910 is thereby arranged to execute methods as herein disclosed.

The storage medium 930 may also comprise persistent storage, which, for example, can be any single one or combination of magnetic memory, optical memory, solid state memory or even remotely mounted memory.

The control unit 110 may further comprise an interface 920 for communications with at least one external device such as a suspension system sensor or IMU. As such the interface 920 may comprise one or more transmitters and receivers, comprising analogue and digital components and a suitable number of ports for wireline or wireless communication.

The processing circuitry 910 controls the general operation of the control unit 110, e.g., by sending data and control signals to the interface 920 and the storage medium 930, by receiving data and reports from the interface 920, and by retrieving data and instructions from the storage medium 930. Other components, as well as the related functionality, of the control node are omitted in order not to obscure the concepts presented herein.

Figure 10 illustrates a computer readable medium 1010 carrying a computer program comprising program code means 1020 for performing the methods illustrated in Figure 10, when said program product is run on a computer. The computer readable medium and the code means may together form a computer program product 1000.

## Claims

1.  A braking system (200, 250, 400, 500, 700) for a heavy duty vehicle (100), the braking system comprising a first brake controller (WEMi, 570) arranged to control braking on a first wheel (120, 150, 170), and a second brake controller (WEMi, 570) arranged to control braking on a second wheel (120, 150, 170), based on a respective wheel slip limit ($\lambda_{LIM\,i}$, 710) and on a respective brake torque request ($T_{REQ\,i}$), wherein the first and the second brake controllers are interconnected via a back-up connection (220) arranged to allow one of the first and the second brake controller to assume braking control of the wheel of the other of the first and the second brake controller in case of brake controller failure, **characterized in that** the braking system comprises a control unit (VMM, 110) arranged to, in response to brake controller failure, reduce (701) the wheel slip limit

($\lambda_{LIM}$ i, 710) associated with the failed brake controller to a reduced wheel slip limit ($\lambda_{LIM}$ i, 730).

2.  The braking system (200, 250, 400, 500, 700) according to claim 1, wherein the first brake controller (WEM1, 570) is arranged to control braking on a front axle (101) left wheel (120l), and wherein the second brake controller (WEM2, 570) is arranged to control braking on a front axle (101) right wheel (120r), whereby the first and second brake controllers are arranged as fail-operational brake controllers.

3.  The braking system (200, 250, 400, 500, 700) according to any previous claim, wherein the control unit (110) is arranged to obtain data related to road friction from a functional brake controller, and to configure the wheel slip limit ($\lambda_{LIM\,i}$, 730, 750, 770) associated with the failed brake controller in dependence of the data related to road friction.

4.  The braking system (200, 250, 400, 500, 700) according to claim 3, wherein the data related to road friction comprises a peak wheel slip value ($\lambda_{PEAK}$) detected by the functional brake controller and/or an estimated road friction coefficient ($\mu_{EST}$).

5.  The braking system (200, 250, 400, 500, 700) according to any previous claim, wherein the reduced wheel slip limit ($\lambda_{LIM}$ i, 730) is determined based on a table of reduced slip limits ($\lambda_{LOW}$, 730), wherein the table of reduced slip limits is configured to be indexed by a wheel slip value determined for a wheel on the same side of the vehicle as the failed brake controller.

6.  The braking system (200, 250, 400, 500, 700) according to any of claims 1-4, wherein the reduced wheel slip limit ($\lambda_{LOW}$, 730) is determined as the smallest peak wheel slip detected by a functional brake controller of a wheel on the same side of the vehicle as the failed brake controller, and reduced by a pre-determined safety factor.

7.  The braking system (200, 250, 400, 500, 700) according to any previous claim, wherein the control unit (110) is arranged to increase brake torque and/or wheel slip limit on one or more trailer wheels (180) in response to front axle brake controller failure.

8.  The braking system (700) according to any previous claim, wherein the control unit (110) is arranged to increase the configured wheel slip limit ($\lambda_{LIM\,i}$, 750) associated with the failed brake controller from the reduced wheel slip limit ($\lambda_{LOW\,i}$, 730) up to a backup mode wheel slip limit ($\lambda_{BU}$, 770).

9.  The braking system (700) according to claim 8, wherein the back-up mode wheel slip limit ($\lambda_{BU}$, 770) is smaller or equal to the initially configured wheel slip limit ($\lambda_{CON\,i}$, 710).

10. The braking system (700) according to claim 8 or 9, wherein the increase (750) from the reduced wheel slip limit ($\lambda_{LOW\,i}$, 730) up to the back-up mode wheel slip limit ($\lambda_{BU}$, 770) is a linear function (750).

11. The braking system (400) according to any previous claim, wherein a wheel speed sensor (WS1, WS2) associated with a wheel (120l, 120r) on the front axle (101) is arranged cross-wise connected to (440, 450) a brake controller (WEM1, WEM2) associated with a wheel (120l, 120r) on the other side of the front axle.

12. The braking system (400) according to any previous claim, wherein the vehicle comprises first (106) and second (107) rear wheel axles, wherein a wheel speed sensor (WS3, WS4) associated with a wheel (140l, 140r) on the first rear axle (106) is arranged connected to (460l, 470r, 460l, 470r) a brake controller (WEM5, WEM6) associated with a wheel (160l, 160r) on the second rear wheel axle (107) and on the same side as the wheel on the first rear axle (106).

13. The braking system (400) according to claim 12, wherein a rear axle wheel brake controller is arranged to detect wheel lift-off by comparing wheel speed sensor output from respective first rear axle (106) wheel speed sensor and second rear axle (107) wheel speed sensor, wherein the control unit (110) is arranged to reduce the configured wheel slip limit ($\lambda_{LIM\,i}$) associated with the brake controller that detects wheel lift-off.

14. A vehicle (100) comprising the braking system (200, 250, 400, 500, 700) according to any previous claim.

15. A method for braking a heavy duty vehicle (100), the method comprising;

configuring (S1) a braking system comprising a first brake controller (570, WEMi) arranged to control braking on a first wheel (120, 150, 170), and a second brake controller (570, WEMi) arranged to control braking on a second wheel (120, 150, 170), based on a respective configured wheel slip limit ($\lambda_{LIM\,i}$) and on a respective brake torque request ($T_{REQ\,i}$), wherein the first and the second brake controllers are interconnected via a back-up connection (220) arranged to allow one of the first and the second brake controller to assume braking control of the wheel of the other of the first and the second brake controller in case of brake controller failure, **characterized in that** the method comprises,

in response to brake controller failure, reducing (S2, 701) the configured wheel slip limit ($\lambda_{LIM\,i}$, 710) associated with the failed brake controller to a reduced wheel slip limit ($\lambda_{LIM\,i}$, 730).

16. The method according to claim 15, comprising

obtaining (S3) data related to road friction from a functional brake controller, and configuring (S4) the wheel slip limit ($\lambda_{LIM\,i}$) associated with the failed brake controller in dependence of the data related to road friction.

17. The method according to any of claims 15-16, comprising increasing (S5, 750) the configured wheel slip limit ($\lambda_{LIM\,i}$) associated with the failed brake controller from the reduced wheel slip limit ($\lambda_{LOW}$, 730) up to a back-up mode wheel slip limit ($\lambda_{BU}$, 770).

18. A computer program (1020) comprising program code means for performing the steps of any of claims 15-17 when said program is run on a computer or on processing circuitry (910) of a control unit (110).

19. A computer readable medium (1010) carrying a computer program (1020) comprising program code means for performing the steps of any of claims 15-17 when said program product is run on a computer or on processing circuitry (910) of a control unit (110).

**Patentansprüche**

1. Bremssystem (200, 250, 400, 500, 700) für ein Schwerlastfahrzeug (100), wobei das Bremssystem eine erste Bremssteuerung (WEMi, 570) umfasst, die dazu angeordnet ist, Bremsen eines ersten Rades (120, 150, 170) zu steuern, und eine zweite Bremssteuerung (WEMi, 570), die dazu angeordnet ist, Bremsen eines zweiten Rades (120, 150, 170) zu steuern, basierend auf einer jeweiligen Radschlupfgrenze ($\lambda_{LIM\,i}$, 710) und auf einer jeweiligen Bremsmomentanforderung ($T_{REQ\,i}$), wobei die erste und die zweite Bremssteuerung über eine Backup-Verbindung (220) miteinander verbunden sind, die dazu angeordnet ist, es einer von der ersten und der zweiten Bremssteuerung zu ermöglichen, im Falle eines Ausfalls der Bremssteuerung die Bremssteuerung des Rades der anderen von der ersten und der zweiten Bremssteuerung zu übernehmen, **dadurch gekennzeichnet, dass** das Bremssystem eine Steuereinheit (VMM, 110) umfasst, die dazu angeordnet ist, in Reaktion auf einen Ausfall einer Bremssteuerung der Radschlupfgrenze ($\lambda_{LIM\,i}$, 710), die der ausgefallenen Bremssteuerung zugeordnet ist, auf eine reduzierte Radschlupfgrenze ($\lambda_{LIM\,i}$,

730) zu reduzieren (701) .

2. Bremssystem (200, 250, 400, 500, 700) nach Anspruch 1, wobei die erste Bremssteuerung (WEM1, 570) dazu angeordnet ist, Bremsen eines linken Rades (1201) an einer Vorderachse (101) zu steuern, und wobei die zweite Bremssteuerung (WEM2, 570) dazu angeordnet ist, Bremsen eines rechten Rades (120r) an einer Vorderachse (101) zu steuern, wobei die erste und die zweite Bremssteuerung als Fail-Operational-(betriebssichere)-Bremssteuerungen angeordnet sind.

3. Bremssystem (200, 250, 400, 500, 700) nach einem vorhergehenden Anspruch, wobei die Steuereinheit (110) dazu angeordnet ist, Daten bezüglich der Fahrbahnreibung von einer funktionsfähigen Bremssteuerung einzuholen und die Radschlupfgrenze ($\lambda_{LIM\,i}$, 730, 750, 770), die der ausgefallenen Bremssteuerung zugeordnet ist, in Abhängigkeit von den Daten bezüglich der Fahrbahnreibung zu konfigurieren.

4. Bremssystem (200, 250, 400, 500, 700) nach Anspruch 3, wobei die Daten bezüglich der Fahrbahnreibung einen Radschlupfhöchstwert ($\lambda_{PEAK}$) umfassen, der von der funktionsfähigen Bremssteuerung erkannt wird, und/oder einen geschätzten Fahrbahnreibungskoeffizienten ($\mu_{EST}$).

5. Bremssystem (200, 250, 400, 500, 700) nach einem vorhergehenden Anspruch, wobei die reduzierte Radschlupfgrenze ($\lambda_{LIM\,i}$, 730) basierend auf einer Tabelle reduzierter Schlupfgrenzen ($\lambda_{LOW}$, 730) bestimmt wird, wobei die Tabelle reduzierter Schlupfgrenzen dazu konfiguriert ist, durch einen Radschlupfwert indiziert zu werden, der für ein Rad auf der gleichen Seite des Fahrzeugs wie die ausgefallene Bremssteuerung bestimmt wird.

6. Bremssystem (200, 250, 400, 500, 700) nach einem der Ansprüche 1 bis 4, wobei die reduzierte Radschlupfgrenze ($\lambda_{LOW}$, 730) als der kleinste Radschlupfhöchstwert bestimmt wird, der durch eine funktionsfähige Bremssteuerung eines Rades auf der gleichen Seite des Fahrzeugs wie die ausgefallene Bremssteuerung erkannt wird, und vermindert um einen vorab festgelegten Sicherheitsfaktor.

7. Bremssystem (200, 250, 400, 500, 700) nach einem vorhergehenden Anspruch, wobei die Steuereinheit (110) dazu angeordnet ist, in Reaktion auf einen Ausfall der Bremssteuerung einer Vorderachse das Bremsmoment und/oder die Radschlupfgrenze an einem oder mehreren Rädern (180) des Anhängers zu erhöhen.

8. Bremssystem (700) nach einem vorhergehenden Anspruch, wobei die Steuereinheit (110) dazu angeordnet ist, die konfigurierte Radschlupfgrenze ($\lambda_{LIM\,i}$, 750), die der ausgefallenen Bremssteuerung zugeordnet ist, von der reduzierten Radschlupfgrenze ($\lambda_{LOW}$, 730) auf eine Backup-Modus-Radschlupfgrenze ($\lambda_{BU}$, 770) zu erhöhen.

9. Bremssystem (700) nach Anspruch 8, wobei die Backup-Modus-Radschlupfgrenze ($\lambda_{BU}$, 770) kleiner oder gleich der anfänglich konfigurierten Radschlupfgrenze ($\lambda_{CON\,i}$, 710) ist.

10. Bremssystem (700) nach Anspruch 8 oder 9, wobei die Erhöhung (750) von der reduzierten Radschlupfgrenze ($\lambda_{LOW\,i}$, 730) auf die Backup-Modus-Radschlupfgrenze ($\lambda_{BU}$, 770) eine lineare Funktion (750) ist.

11. Bremssystem (400) nach einem vorhergehenden Anspruch, wobei ein Radgeschwindigkeitssensor (WS1, WS2), der einem Rad (1201, 120r) an der Vorderachse (101) zugeordnet ist, kreuzweise verbunden (440, 450) mit einer Bremssteuerung (WEM1, WEM2) angeordnet ist, die einem Rad (1201, 120r) auf der anderen Seite der Vorderachse (101) zugeordnet ist.

12. Bremssystem (400) nach einem vorhergehenden Anspruch, wobei das Fahrzeug eine erste (106) und eine zweite (107) Hinterradachse umfasst, wobei ein Radgeschwindigkeitssensor (WS3, WS4), der einem Rad (1401, 140r) an der ersten Hinterachse (106) zugeordnet ist, mit einer Bremssteuerung (WEM5, WEM6) verbunden (4601, 460r, 4701, 470r) angeordnet ist, die einem Rad (1601, 160r) an der zweiten Hinterachse (107) zugeordnet ist und sich auf der gleichen Seite wie das Rad an der ersten Hinterachse (106) befindet.

13. Bremssystem (400) nach Anspruch 12, wobei eine Bremssteuerung für ein Hinterachsenrad dazu angeordnet ist, durch Vergleichen einer Radgeschwindigkeitssensor-Ausgabe des jeweiligen Radgeschwindigkeitssensors der ersten Hinterachse (106) und des jeweiligen Radgeschwindigkeitssensors der zweiten Hinterachse (107) ein Abheben des Rades zu erkennen, wobei die Steuereinheit (110) dazu angeordnet ist, die konfigurierte Radschlupfgrenze ($\lambda_{LIM\,i}$) zu reduzieren, die der Bremssteuerung zugeordnet ist, die das abgehobene Rad erkennt.

14. Fahrzeug (100), das Bremssystem (200, 250, 400, 500, 700) nach einem vorhergehenden Anspruch umfassend.

15. Verfahren zum Bremsen eines Schwerlastfahrzeugs (100), wobei das Verfahren Folgendes umfasst: Konfigurieren (S1) eines Bremssystems, das eine erste Bremssteuerung (570, WEMi) umfasst, die dazu angeordnet ist, Bremsen eines ersten Rades (120, 150, 170) zu steuern, und eine zweite Bremssteuerung (570, WEMi), die dazu angeordnet ist, Bremsen eines zweiten Rades (120, 150, 170) zu steuern, basierend auf einer jeweiligen konfigurierten Radschlupfgrenze ($\lambda_{LIM\,i}$) und auf einer jeweiligen Bremsmomentanforderung ($T_{REQ\,i}$), wobei die erste und die zweite Bremssteuerung über eine Backup-Verbindung (220) miteinander verbunden sind, die dazu angeordnet ist, es einer von der ersten und der zweiten Bremssteuerung zu ermöglichen, im Falle eines Ausfalls der Bremssteuerung die Bremssteuerung des Rades der anderen von der ersten und der zweiten Bremssteuerung zu übernehmen, **dadurch gekennzeichnet, dass** das Verfahren Folgendes umfasst:
Reduzieren (S2, 701) der konfigurierten Radschlupfgrenze ($\lambda_{LIM\,i}$, 710), die der ausgefallenen Bremssteuerung zugeordnet ist, auf eine reduzierte Radschlupfgrenze ($\lambda_{LIM\,i}$, 730) .

16. Verfahren nach Anspruch 15, Folgendes umfassend:

   Einholen (S3) von Daten bezüglich der Fahrbahnreibung von einer funktionsfähigen Bremssteuerung und
   Konfigurieren (S4) der Radschlupfgrenze ($\lambda_{LIM\,i}$), die der ausgefallenen Bremssteuerung zugeordnet ist, in Abhängigkeit von den Daten bezüglich der Fahrbahnreibung.

17. Verfahren nach einem der Ansprüche 15 bis 16, Folgendes umfassend:
Erhöhen (S5, 750) der konfigurierten Radschlupfgrenze ($\lambda_{LIM\,i}$), die der ausgefallenen Bremssteuerung zugeordnet ist, von der reduzierten Radschlupfgrenze ($\lambda_{LOW}$, 730) auf eine Backup-Modus-Radschlupfgrenze ($\lambda_{BU}$, 770) .

18. Computerprogramm (1020), das Programmcodemittel umfasst, um die Schritte nach einem der Ansprüche 15 bis 17 auszuführen, wenn das Programm auf einem Computer oder einer Verarbeitungsschaltung (910) einer Steuereinheit (110) läuft.

19. Computerlesbares Medium (1010), das ein Computerprogramm (1020) trägt, welches Programmcodemittel umfasst, um die Schritte nach einem der Ansprüche 15 bis 17 auszuführen, wenn das Programmprodukt auf einem Computer oder einer Verarbeitungsschaltung (910) einer Steuereinheit (110) läuft.

**Revendications**

1. Système de freinage (200, 250, 400, 500, 700) pour un véhicule lourd (100), le système de freinage comprenant un premier dispositif de commande de frein (WEMi, 570) agencé pour commander le freinage sur une première roue (120, 150, 170), et un second dispositif de commande de frein (WEMi, 570) agencé pour commander le freinage sur une seconde roue (120, 150, 170), sur la base d'une limite de patinage de roue ($\lambda_{LIM\,i}$, 710) respective et d'une demande de couple de frein ($T_{REQ\,i}$) respective, dans lequel les premier et second dispositifs de commande de frein sont interconnectés via une connexion de secours (220) agencée pour permettre à l'un du premier et du second dispositif de commande de frein d'assumer la commande de freinage de la roue de l'autre du premier et du second dispositif de commande de frein en cas de défaillance de dispositif de commande de frein, **caractérisé en ce que** le système de freinage comprend une unité de commande (VMM, 110) agencée pour, en réponse à une défaillance de dispositif de commande de frein, réduire (701) la limite de patinage de roue ($\lambda_{LIM\,i}$, 710) associée au dispositif de commande de frein défaillant à une limite de patinage de roue ($\lambda_{LIM\,i}$, 730) réduite.

2. Système de freinage (200, 250, 400, 500, 700) selon la revendication 1, dans lequel le premier dispositif de commande de frein (WEM1, 570) est agencé pour commander le freinage sur une roue gauche (1201) d'essieu avant (101), et dans lequel le second dispositif de commande de frein (WEM2, 570) est agencé pour commander le freinage sur une roue droite (120r) d'essieu avant (101), moyennant quoi les premier et second dispositifs de commande de frein sont agencés en tant que dispositifs de commande de frein opérationnels après défaillance.

3. Système de freinage (200, 250, 400, 500, 700) selon une quelconque revendication précédente, dans lequel l'unité de commande (110) est agencée pour obtenir des données relatives au frottement routier à partir d'un dispositif de commande de frein fonctionnel, et pour configurer la limite de patinage de roue ($\lambda_{LIM\,i}$, 730, 750, 770) associé au dispositif de commande de frein défaillant en fonction des données relatives au frottement routier.

4. Système de freinage (200, 250, 400, 500, 700) selon la revendication 3, dans lequel les données relatives au frottement routier comprennent une valeur maximale de patinage de roue ($\lambda_{PEAK}$) détectée par le dispositif de commande de frein fonctionnel et/ou un coefficient de frottement routier estimé ($\mu_{EST}$).

5. Système de freinage (200, 250, 400, 500, 700) selon une quelconque revendication précédente, dans lequel la limite de patinage de roue réduite ($\lambda_{LIM\,i}$, 730) est déterminée sur la base d'un tableau de limites

de patinage réduites ($\lambda_{LOW}$, 730), dans lequel le tableau de limites de patinage réduites est configuré pour être indexé par une valeur de patinage de roue déterminée pour une roue du même côté du véhicule que le dispositif de commande de frein défaillant.

6. Système de freinage (200, 250, 400, 500, 700) selon l'une quelconque des revendications 1 à 4, dans lequel la limite de patinage de roue réduite ($\lambda_{LOW}$, 730) est déterminée comme étant le plus petit patinage maximal de roue détecté par un dispositif de commande de frein fonctionnel d'une roue du même côté du véhicule que le dispositif de commande de frein défaillant, et réduit d'un facteur de sécurité prédéterminé.

7. Système de freinage (200, 250, 400, 500, 700) selon une quelconque revendication précédente, dans lequel l'unité de commande (110) est agencée pour augmenter le couple de frein et/ou la limite de patinage de roue sur une ou plusieurs roues de remorque (180) en réponse à une défaillance de dispositif de commande de frein d'essieu avant.

8. Système de freinage (700) selon une quelconque revendication précédente, dans lequel l'unité de commande (110) est agencée pour augmenter la limite de patinage de roue configurée ($\lambda_{LIM\,i}$, 750) associée au dispositif de commande de frein défaillant à partir de la limite de patinage de roue réduite ($\lambda_{LOW\,i}$, 730) jusqu'à une limite de patinage de roue de mode de secours ($\lambda_{BU}$, 770).

9. Système de freinage (700) selon la revendication 8, dans lequel la limite de patinage de roue de mode de secours ($\lambda_{BU}$, 770) est inférieure ou égale à la limite de patinage de roue initialement configurée ($\lambda_{CON\,i}$, 710).

10. Système de freinage (700) selon la revendication 8 ou 9, dans lequel l'augmentation (750) à partir de la limite de patinage de roue réduite ($\lambda_{LOW\,i}$, 730) jusqu'à la limite de patinage de roues de mode de secours ($\lambda_{BU}$, 770) est une fonction linéaire (750).

11. Système de freinage (400) selon une quelconque revendication précédente, dans lequel un capteur de vitesse de roue (WS1, WS2) associé à une roue (1201, 120r) sur l'essieu avant (101) est agencé en connexion transversale à (440, 450) un dispositif de commande de frein (WEM1, WEM2) associé à une roue (1201, 120r) de l'autre côté de l'essieu avant.

12. Système de freinage (400) selon une quelconque revendication précédente, dans lequel le véhicule comprend des premier (106) et second (107) essieux de roue arrière, dans lequel un capteur de vitesse de roue (WS3, WS4) associé à une roue (1401, 140r) sur le premier essieu arrière (106) est agencé en connexion à (4601, 470r, 4601, 470r) un dispositif de commande de frein (WEM5, WEM6) associé à une roue (1601, 160r) sur le second essieu de roue arrière (107) et du même côté que la roue sur le premier essieu arrière (106).

13. Système de freinage (400) selon la revendication 12, dans lequel un dispositif de commande de frein de roue d'essieu arrière est agencé pour détecter un décollage de roue en comparant une sortie de capteur de vitesse de roue d'un premier capteur de vitesse de roue d'essieu arrière (106) et d'un second capteur de vitesse de roue d'essieu arrière (107) respectifs, dans lequel l'unité de commande (110) est agencée pour réduire la limite de patinage de roue configurée ($\lambda_{LIM\,i}$) associée au dispositif de commande de frein qui détecte un décollage de roue.

14. Véhicule (100) comprenant le système de freinage (200, 250, 400, 500, 700) selon une quelconque revendication précédente.

15. Procédé pour freiner un véhicule lourd (100), le procédé comprenant :

la configuration (S1) d'un système de freinage comprenant un premier dispositif de commande de frein (570, WEMi) agencé pour commander le freinage sur une première roue (120, 150, 170), et un second dispositif de commande de frein (570, WEMi) agencé pour commander le freinage sur une seconde roue (120, 150, 170), sur la base d'une limite de patinage de roue configurée ($\lambda_{LIM\,i}$) respective et d'une demande de couple de frein ($T_{REQ\,i}$) respective, dans lequel les premier et second dispositifs de commande de frein sont interconnectés via une connexion de secours (220) agencée pour permettre à l'un du premier et du second dispositif de commande de frein d'assumer la commande de freinage de la roue de l'autre du premier et du second dispositif de commande de frein en cas de défaillance de dispositif de commande de frein, **caractérisé en ce que** le procédé comprend, en réponse à une défaillance de dispositif de commande de frein,
la réduction (S2, 701) de la limite de patinage de roue configurée ($\lambda_{LIM\,i}$, 710) associée au dispositif de commande de frein défaillant à une limite de patinage de roue réduite ($\lambda_{LIM\,i}$, 730).

16. Procédé selon la revendication 15, comprenant

l'obtention (S3) de données relatives au frottement routier à partir d'un dispositif de commande de frein fonctionnel, et
la configuration (S4) de la limite de patinage de

roue ($\lambda_{LIM\,i}$) associée au dispositif de commande de frein défaillant en fonction des données
relatives au frottement routier.

**17.** Procédé selon l'une quelconque des revendications
15 à 16, comprenant
l'augmentation (S5, 750) de la limite de patinage de
roue configurée ($\lambda_{LIM\,i}$) associée au dispositif de
commande de frein défaillant à partir de la limite de
patinage de roue réduite ($\lambda_{LOW\,i}$, 730) jusqu'à une
limite de patinage de roue de mode de secours ($\lambda_{BU}$,
770).

**18.** Programme informatique (1020) comprenant un
moyen de code de programme pour réaliser les étapes selon l'une quelconque des revendications 15 à
17 lorsque ledit programme est exécuté sur un ordinateur ou sur un circuit de traitement (910) d'une
unité de commande (110).

**19.** Support lisible par ordinateur (1010) portant un programme informatique (1020) comprenant un moyen
de code de programme pour réaliser les étapes selon l'une quelconque des revendications 15 à 17 lorsque ledit produit de programme est exécuté sur un
ordinateur ou sur un circuit de traitement (910) d'une
unité de commande (110).

100

110

120
130
140
150
160
170

## FIG. 1A

100

101

102

103

110

120 130

140 150
160

170

180

## FIG. 1B

100

101

102

110

120 130

140 150
160

170

104

190

180

## FIG. 1C

200

210l

120l

2111

213l

212l

WEM1

214l

214r

210r

WEM2

220

213r

212r

211r

120r

FIG. 2A

250

210l

120l

215l

214r

210r

213l

WEM1

212l

214l

WEM2

215r

220

213r

212r

211r

120r

FIG. 2B

FIG.3A

FIG.3B

FIG. 4

500

TSM - 510

520
Requests
(acc/curv)

530
Capabilities
Status

VMM - 110

SENSORS – 550
GPS
RADAR
LIDAR
VISION

540
MOTION/STATE
ESTIMATION

560
FORCE
ALLOCATION

$v_{x\,i}$   $\lambda_{LIM\,i}$   $T_{REQ\,i}$   $T_{CAP\,i'}$ $\lambda_{i'}$ $(\lambda_{PEAK\,i'}$ $\mu_{EST\,i})$

WEMi - 570

220

$$\lambda_i = \frac{\omega_i * R_i - v_{x\,i}}{max(|\omega_i * R_i|, |v_{x\,i}|)}$$

580

$\omega_i$

590

FIG. 5

FIG. 6

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170210361 A1
- US 6345225 B
- US 6317675 B
- WO 2017215751 A
- US 6095621 A
- EP 2016063782 W